# EUROPEAN PATENT APPLICATION

(11) **EP 2 157 420 A1**
(43) Date of publication of application: **24.02.2010**
(21) Application number: 08014882.8
(22) Date of filing: 22.08.2008
(51) Int. Cl.: G01N 21/35

(54) **Apparatus and method for investigating a sample using an electro-optic THz-transceiver with the reflected pump beam being used as the probe beam**

(71) Applicant: ETH Zurich, 8092 Zürich (CH)
(72) Inventor: Schneider, Arno, 8049 Zürich (CH)

(57) **Abstract**

The invention relates to an apparatus and a method for investigating a sample by means of THz radiation. The same optical non-linear member is used as an active part of the emitter and as an active part of the detector. The optical non-linear member is irradiated with a pulsed optical beam under conditions that allow THz generation. The THz beam is split off the optical beam, directed onto the sample, and reflected back onto the non-linear member. The optical beam is also, after recombination with the THz beam, reflected back onto the non-linear member. According to the invention, optical properties of the reflected optical beam, which are influenced by the co-propagating THz beam, are measured and evaluated. The reflected optical beam thus acts as probe beam. The invention has the advantage that more intensity is available for each of the processes THz generation and THz detection, as pump beam and probe beam are generally the same.

## Description

### FIELD OF THE INVENTION

The invention relates to the generation and detection of Terahertz (THz) radiation, and more specifically to the generation and detection of pulsed Terahertz (THz) radiation in nonlinear optical crystals pumped by ultrashort optical pulses. More specifically, the invention relates to an apparatus and a method for investigating a sample, e.g. a liquid, biological samples, semiconductors and other inorganic samples, using THz radiation.

### BACKGROUND OF THE INVENTION

In the past decade, the science and technology on electromagnetic radiation with a spectral content in the 0.1 to 10 THz range (Terahertz or THz radiation, 1 THz = 10¹² s⁻¹) have attracted widespread interest and evolved into a useful tool for a number of applications. Many materials are transparent for electromagnetic radiation in the THz range, but unlike X-rays the THz radiation does not have an ionizing effect on the material due to the low energy of its photons. This makes it possible to apply THz radiation in different areas such as imaging/tomography of biological tissue, the measurement of fundamental solid-state processes in semiconductor physics, or in material sciences.

Terahertz radiation lies in the frequency range between microwave and infrared frequencies and has no naturally occurring source that allows to utilize the Terahertz radiation with a spectral resolution. A method for generating THz radiation is to use a frequency conversion member which is configured to change the frequency of an electromagnetic pump beam, in particular a pulsed laser beam with a wavelength in the visible or infrared optical range. A pump pulse in the picosecond or sub-picosecond range contains frequencies in a frequency band Δω around the central frequency ω. Such an ultrashort pulse may produce broadband electromagnetic radiation at THz frequencies in a nonlinear optical material, if certain phase matching conditions are fulfilled.

These materials can also often be used not only for THz generation but also as an active part of a detector for THz radiation. For detection, THz induced modifications in a co-propagating pulsed optical probe beam are measured, e.g. a change in the polarization of the probe beam or a change in the spatial intensity pattern of the probe beam in presence of the THz beam. Such processes are known as electro-optic (EO) sampling or Terahertz induced lensing, for example.

Time-domain terahertz spectroscopy (TDTS) is a phase sensitive method which measures the profile of a terahertz pulse reflected by or transmitted through a sample as a function of time and thus allows the extraction of the complex refractive index of a material. TDTS as presently known is based on splitting an initial laser beam into a pump beam and a probe beam. The pump beam hits an emitter which in the response to the optical pulse generates a THz pulse. The probe beam gates the detector whose response is approximately proportional to the amplitude and the sign of the electric field of the THz pulse. By varying the delay between the pump and probe pulses the whole time profile of the THz pulse is traced. The complex refractive index of the sample can be derived from the ratio of the Fourier transforms of a pulse transmitted or reflected by a sample and a reference, e.g. a freely propagating pulse or a pulse reflected at a reflector whose properties are known.

Some materials are transparent for THz radiation, such that transmission measurements are possible. Others can only be investigated only in a reflection geometry due to their intransparency for THz radiation. It is known to perform reflection and/or transmission measurements with an emitter and a detector that are located at different positions. This leads to a quite bulky setup. Furthermore, the reflection measurement is performed under an angle of incidence different from 90° which can make interpretation of the acquired data difficult.

US 6,865,014 describes an apparatus and a method for investigating a sample which uses an optically non-linear member for both the generation and detection of THz radiation, i.e. as active area of the emitter as well as the detector. A laser beam with pulses of subpicosecond duration is split in a pump beam and a probe beam by means of a beam splitter. The pump beam is directed onto the optical non-linear member that in response to the pump beam emits a beam of THz radiation. The THz radiation is directed to a sample by means of a set of mirrors, and THz radiation reflected from the sample is directed back onto the non-linear member. The probe beam split off from the original laser beam passes a delay line which introduces an adjustable delay with respect to the pump pulse and is then directed to the non-linear member. It has the same direction of propagation as the reflected THz pulse as it passes the non-linear member. By means of a polarizing beamsplitter arranged behind the non-linear member as seen in direction of probe beam propagation, the probe beam is directed to a photodetector.

Though the system described by US 6,865,014 reduces the complexity of the setup by using the optical non-linear member as active area of both the emitter and the detector, there are several disadvantages. First, the probe beam is split off the original laser beam before passing the non-linear member. This means that only a certain part of the maximum laser intensity is present for each of the processes THz generation and THz detection, which reduces the conversion and detection efficiency and thus the signal-noise-ratio. After passing the non-linear member, the pump beam has no function, but is still in the system. In order to distinguish the radiation reflected from the sample from the pump beam, it is suggested to modulate the pump beam and the probe beam with different frequencies and to detect only radiation having a certain modulation. This, however, is complicated.

US 6,865,014 also proposes to linearly polarize the probe beam before it enters the non-linear member, and to measure only the THz induced polarization change of the probe beam by arranging a polarizing beam splitter in the common beam path of the pump, probe and THz beam such that only light having a polarization orthogonal to that of the pump beam is directed towards the optical detector. In the setup shown in US 6,865,014 the probe beam and the pump beam thus have the same polarization when hitting the non-linear member. For ZnTe however, and for nonlinear crystals with the same structure such as GaAs, the efficiency for equal polarisations of pump and probe pulse is far from optimal. Furthermore, the fraction of the probe pulse that is reflected towards the photodetector is proportional to the square of the amplitude of the THz pulse. The consequences of this are (i) small signal amplitudes at the photodetector, (ii) a distortion of the THz waveform, and (iii) no information on the sign of the THz amplitude. This makes it difficult or even impossible to trace the temporal profile of the Terahertz pulse with a high precision.

For a different class of nonlinear materials, e.g. DAST, parallel polarisations of pump beam and probe beam as suggested in US 6,865,014 allow a maximum efficiency for both generation and detection of the THz beam simultaneously. However, there is no polarisation change of the probe beam in this case, and no light is guided towards the photodetector, making it impossible to measure the THz waveform.

### SUMMARY OF THE INVENTION

It is thus an object of the invention to provide an apparatus and a method for investigating a sample using THz radiation that avoids the problems of the prior art. In particular, the efficiency of THz generation and detection shall be increased, and the complexity and the required space shall be reduced.

This object is achieved by an apparatus and a method for investigating a sample with the features of claims 1 and 8, respectively. Advantageous embodiments of the invention are described in the dependent claims, the description and the figures.

As generally known from the prior art, the apparatus according to the invention comprises an emitter and a detector, wherein the emitter and the detector have a common active part comprising an optical non-linear member, e.g. an optical non-linear crystal or a non-linear optical polymer. The emitter is configured to generate a Terahertz beam having at least one frequency in the range from 0.01 to 100 THz, in particular 0.1-5 THz, upon exposure with an electromagnetic pump beam, e.g. a laser beam having at least one frequency in the optical range. Optical range in the context of the invention means the visible part of the electromagnetic spectrum, as well as the ultraviolet and/or infrared part, i.e. wavelengths of 200 to 3000 nm, preferably 400-2000 nm. The detector is configured to measure a modification in an electromagnetic probe beam, e.g. a laser beam having at least one frequency in the optical range, wherein the modification is induced by the Terahertz beam. In a Terahertz beam path the Terahertz beam generated by the emitter is directed onto the sample and the Terahertz beam reflected from the sample or from a THz reflector located behind the sample is directed to the detector. This is achieved by appropriate beam directing means, e.g. mirrors that are reflective in the THz spectral range.

The emitter comprises an optically non-linear member with optical properties that preferably allow velocity matched propagation of an optical and a THz pulse, e.g. a optically non-linear crystal or polymer member. The detector uses the same optically non-linear member and additionally comprises means for measuring those properties of the probe beam that are influenced by the THz beam, e.g. a photodetector for measuring the intensity, an intensity ratio or spatial pattern of the probe beam.

Contrary to the prior art, the probe beam is not split from the original laser beam before the optical non-linear member as seen in the direction of laser beam propagation. The THz beam is split from the laser beam after passing the non-linear member, e.g. by means of a suitable beam splitter, e.g. a dichroic mirror or an element with the same function, e.g. a mirror with a hole like in US 6,865,014. The laser beam, having acted as a pump beam at first, is then reflected back onto the non-linear member by means of an optical reflector arranged behind the optical non-linear member, as seen in the direction of pump beam propagation. The reflected pump beam then acts as probe beam after re-combination with the reflected THz beam by said beam splitter. The reflected optical beam (probe beam) uses the same path as the original beam (pump beam), which also makes the system very compact.

The invention has the advantage that the full intensity of the laser beam can be used as pump beam for THz generation. The optical beam, having passed the non-linear member, is used as probe beam. Consequently, also the intensity of the probe beam can be increased compared to the prior art. Conversion and detection efficiency is increased compared to systems where the laser intensity is a priori divided between pump and probe beam. Also, no complicated measures like modulating the signals are necessary to distinguish between pump and probe beam in the detector. Modulation may be performed, if the signals have a very small intensity.

As the probe beam is constituted by the pump beam reflected back onto the non-linear member, the pump and the probe beam inherently have the same polarization, if no elements are present that affect the pump and probe beams differently. Consequently, the probe beam generally travels through the non-linear member with the same polarization as the pump beam. This polarization can be chosen such that a maximum conversion efficiency is achieved, and therefore also a maximum detection efficiency. For some non-linear optical materials used as conversion/detection member, e.g. ZnTe or other crystals having zinc blende structure, it may be beneficial to adjust the polarization of the probe beam prior to recombination with the Terahertz-beam, such that the probe beam has a different polarization than the pump beam.

In an advantageous embodiment there are further elements present that allow distinguishing between the pump and the probe beam after the probe beam has traveled through the non-linear member. This makes it possible to direct only the probe beam to the optically sensitive part of the detector. Such elements, for example, comprise a Faraday rotator arranged in front of the optical non-linear member, as seen in the direction of pump beam propagation, and behind the optical non-linear member, as seen in the direction of probe beam propagation. The Faraday rotator changes the polarization in dependence of the direction of beam propagation.

By combination with further suitable means such as wave plates or electro-optical elements, it can be achieved that the full intensity of the original laser beam is transmitted to the non-linear member, and, for some non-linear materials, also the full intensity of the probe beam is transmitted to the photosensitive part of the detector. This will be described in more detail with reference to the Figures.

Yet another advantage is given by the fact that transmission as well as reflection measurements can be performed using one and the same setup. The temporal profile of the THz pulse and thus its spectral content is derived by varying the delay between the pump and the probe beam, as described in the introductory portion. The THz beam reflected at the rear surface of the sample (or a reflector located behind the sample) has traveled twice through the sample and thus contains all information of a conventional transmission measurement, however with a reduced intensity. Whether transmission data or reflection data are acquired only depends on the relative delay between the pulses. With one single scan (variation of the delay over a predetermined range), it is thus possible to acquire both transmission and reflection data.

Preferably, the apparatus according to the invention comprises an adjustable delay in the path of the probe beam that can be varied with appropriate means, e.g. a stepping motor. In particular, the optical reflector used for reflecting back the pump/probe beam can be movable along the beam axis. In order to obtain a spectrum, the detector measures the THz influenced optical signal as a function of the delay. For screening, imaging or tomography purposes, the delay could also be fixed.

It is preferred that the THz beam is directed to the sample under an angle of incidence of its optical axis with respect to the sample surface of approximately 90°. THz radiation reflected by the sample then automatically travels the same beam path back to the non-linear member. For investigating (partially) transmissive samples, there is a THz reflector, e.g. a planar or curved mirror, located behind the sample that reflects the THz radiation back into the incoming THz beam path.

Several materials are suitable as an active material for THz generation and detection, including the inorganic semiconductors ZnTe (zinc telluride), GaAs (Gallium Arsenide) or organic crystals like DAST (4-N,N-dimethylamino-4'-N'-methyl stilbazolium tosylate), DSTMS (4-N,N-dimethylamino-4'-N'-methylstilbazolium 2,4,6-trimethylbenzenesulfonate), or OH1 (2-[3-(4-hydroxystyryl)-5,5-dimethylcyclohex-2-enylidene]malononitrile).

The optical beam is preferably a beam of picosecond or subpicosecond laser pulses for which phase matching conditions with a THz beam in the non-linear material are fulfilled. For example, the polarizations of the optical and THz beam are matched to the electrooptic coefficients of the non-linear material, e.g. its orientation. For example, velocity-matching with THz pulses of around 0.01-3 THz is achieved in ZnTe for all crystal orientations for optical pulses having a wavelength around 800 nm. In DAST, velocity matching is achieved for optical pulses polarized along the <100> crystal axis in the telecommunication range around 1.5 µm. In GaAs, velocity/phase matching is again independent of the orientation for optical pulses around 1.5 µm.

The invention is suited for obtaining spectral information on a sample or for imaging applications, e.g. quick material tests. In the latter, the presence of irregularities in a workpiece can be detected by comparing the reflected/transmitted THz intensity (without temporal/spectral information) with a reference. If a deviation from a standard value is detected, a full scan can be carried out to further investigate the nature of the irregularity.

Compared to known systems, the present setup is less complex. For example, it is sufficient that the reflector for the pump beam transmitted by the optically non-linear member is a simple mirror rather than a retro reflector generating a beam offset. As the probe beam comprises a higher portion of the original laser intensity, the signal-noise-ratio is increased and the detection can be simplified.

### BRIEF DESCRIPTION OF THE DRAWINGS

- Fig. 1: a base version of the apparatus according to the invention;
- Fig. 2: an apparatus as shown in Fig. 1 with a reflector located behind the sample;
- Fig. 3: a typical signal acquired by the detector for a reference and a sample;
- Fig. 4: the apparatus shown in Fig. 2 used for imaging purposes;
- Fig. 5: signals indicating discontinuities at different sample positions;
- Fig. 6+7: different setups for increasing the probe beam intensity with DAST as optically non-linear member;
- Fig. 8: a setup for increasing the conversion/detection efficiency with ZnTe as optically non-linear member.

### DESCRIPTION OF THE PREFERRED EMBODIMENTS

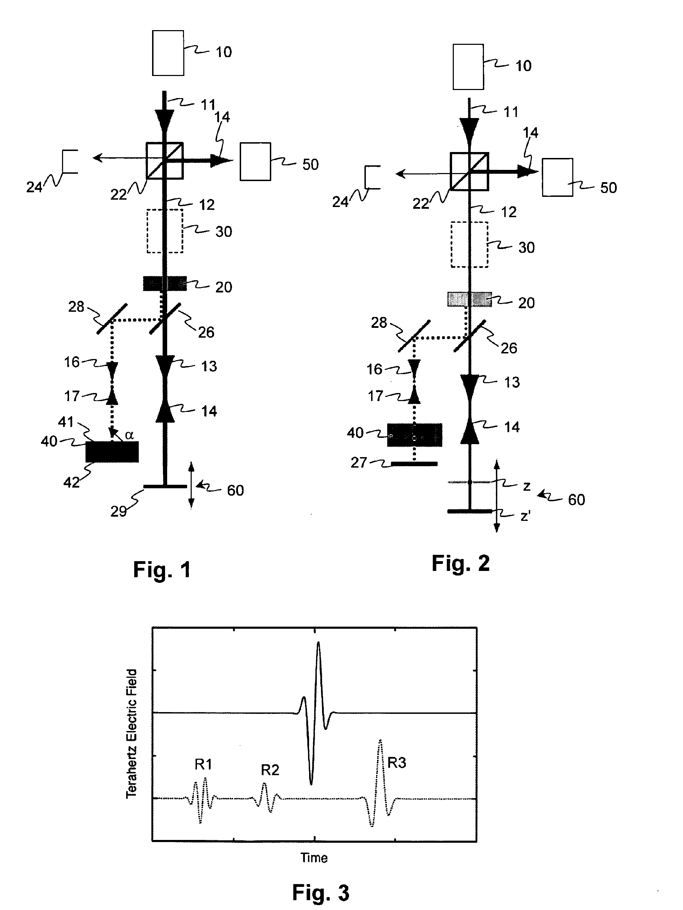

Fig. 1 shows an apparatus according to the invention. Light coming from a pulsed laser source 10 producing pulses with the picosecond or sub-picosecond duration is directed as pump beam 12 toward a suitable optically non-linear member 20, e.g. a ZnTe or DAST crystal. The system parameters, e.g. crystal orientation, polarization, wavelength, are chosen such that the conditions for THz generation are fulfilled.

The pump beam 12 and the generated THz beam 16 leave the optically non-linear member 20 in the same direction. By a dichroic mirror 26, e.g. an ITO coated plate or a mirror with a hole like in US 6,865,014, the THz beam 16 is separated from the optical beam 12 (now designated with reference numeral 13). The THz beam 16 is directed towards a sample 40 with further beam deviating elements 28. They may be a planar or curved mirror, for example, for homogenously irradiating the sample 40 or for focusing the THz beam 16 onto the sample 40, with an angle of incidence α of approximately 90°. The THz beam 16 is totally or partly reflected from the sample 40; the reflected THz beam is indicated with reference numeral 17. It travels the same path back as the incoming THz beam 16 due to the 90° incidence, and finally also travels through the optically non-linear member 20.

The pump beam 13 leaving the optically non-linear member 20 is retroreflected at another reflector 29 and directed back onto the optically non-linear member 20. The reflected pump beam 13 acts as probe beam 14. It is combined with the reflected THz beam 17 by means of the same dichroic mirror 26. In the optically non-linear member 20, the THz beam 17 induces a modification of the optical properties of the probe beam 14 that can be measured by a photosensitive part 50 of the detector, e.g. a photodiode.

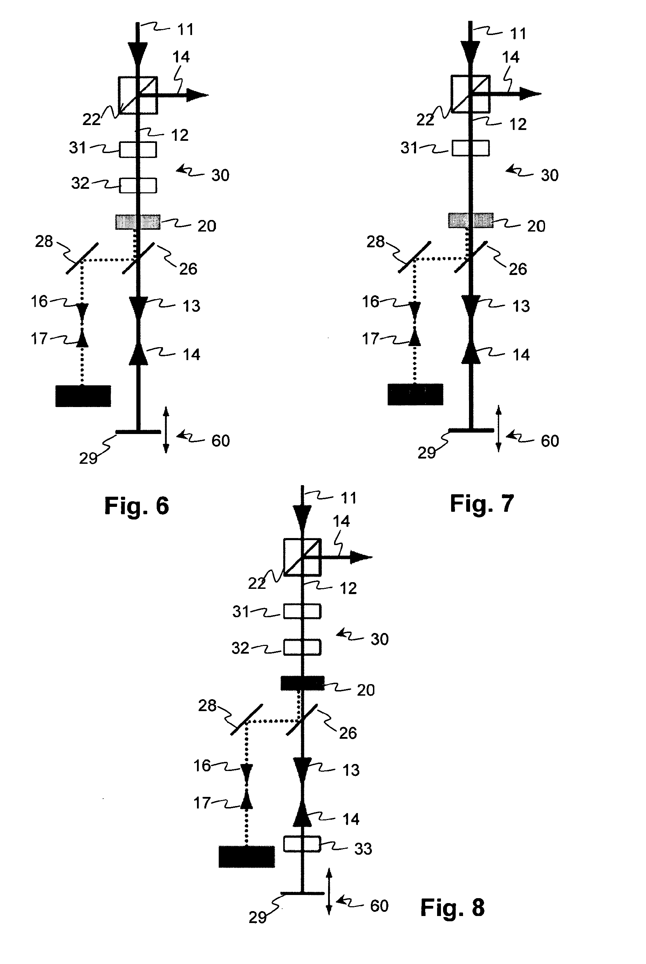

The original laser beam 11 may be coupled into the system via a normal or polarizing beam splitter 22. If a normal beam splitter 22 is used, part of the original intensity will be reflected and directed to a beam dump 24. Preferably, a polarizing beam splitter 22 is used. In combination, the polarization affecting means 30 and the polarizing beam splitter 22 serve to direct nearly all of the original intensity as pump beam 12 towards the optically non-linear member 20 and to change the polarization of the reflected pump beam - i.e. the probe beam 14 - after its transmission through the optically non-linear member 20 in such a way that it is preferably completely reflected by the beam splitter 22 (with the exception of ZnTe or similar materials as non-linear member, as will be discussed with reference to Fig.8) and directed to the photosensitive part of the detector 50. The polarization affecting means 30 thus serve to distinguish between light traveling towards the optically non-linear member 20 and away therefrom. Examples for such polarization affecting means 30 are described with reference to Figs. 6-8.

The optical reflector 29 in the pump/probe beam path 13/14 may be moved by means of a suitable actuator, e.g. a stepping motor, in direction of light propagation, thus introducing a variable delay 60 into the beam path. Fig. 2 shows the reflector 29 in two different positions at z, z'. Depending on the position, a THz signal from the front side 41, the rear side 42 or from a reflector 27 arranged behind the sample 40 will be measured.

The THz reflector 27 behind the sample 40 may be a planar or curved mirror, depending on the geometry of the THz beam (e.g. curved for a focussed THz beam, planar for an unfocussed THz beam). For transparent samples, the transmitted THz beam has a higher intensity than the beam reflected at the rear side 42 (Fig. 1), leading to an improved signal-noise-ratio.

Fig. 3 shows very schematically examples of typical THz signals. The electric field of the THz signal is plotted against the time (delay). The signal is derived from those optical parameters of the probe beam that are an indicator of the THz field in the detection method used, e.g. polarization change. The upper line is a reference signal acquired without a sample and corresponds to a single reflection of the THz beam at the THz reflector 27. The lower line is a typical signal corresponding to a reflection (peak R1) at the front surface 41 of the sample, a reflection (peak R2) at the rear surface of the sample and a reflection (peak R3) at the reflector 27. The reflection peak R1 contains information of a classical reflection measurement; the other peaks R2 and R3 each contain information of a transmission measurement. Depending on the transparency of the sample in the THz range, it may be efficient to evaluate the peak R2 and/or R3; both peaks R2, R3 bear generally the same information on the sample (transparency measurement), but may have different amplitudes. Information on the thickness of the sample can be derived from the temporal separation of peaks R1 and R2.

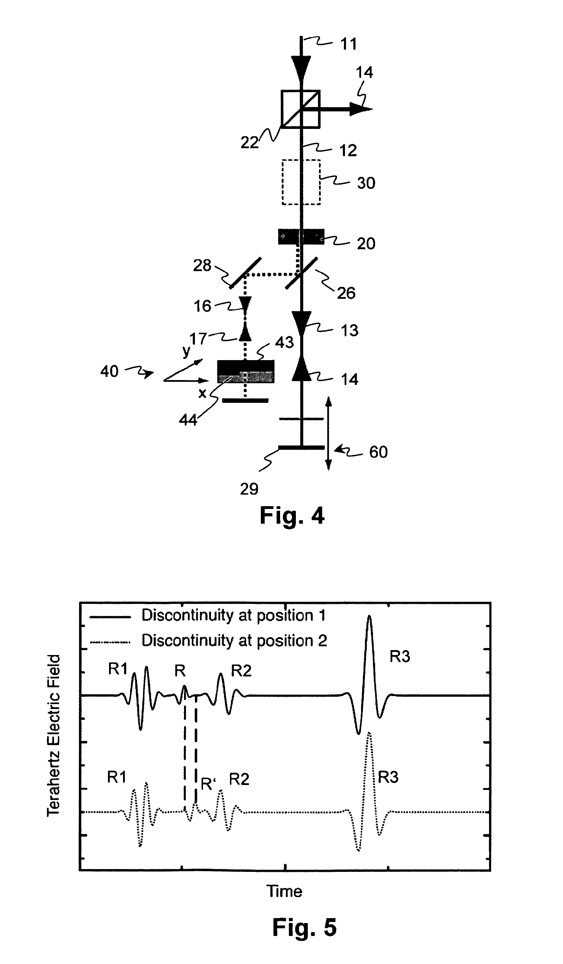

Fig. 4 shows a setup for the imaging of a sample. The basic setup corresponds to Fig. 2. The sample 40 is movable in lateral direction (x, y) with respect to the axis of the THz beam 16. For this, a sample holder may be present which can be moved in x-and y-direction, for example by means of a stepping motor. A spectrum is acquired for selected points x/y by scanning the reflector 29 in the path of the probe beam 14 in z-direction.

The present example illustrates how a discontinuity in the investigated material can be detected using THz spectroscopy. The sample 40 consists of two layers 43, 44 with different properties for the propagation of the THz beam. The discontinuity between the layers 43, 44 leads to a small reflection peak R in the time dependent THz signal (Fig. 5). The position of the reflection peak R in the THz signal depends on the position of the discontinuity in the sample as seen in the direction of THz beam propagation (z-direction). Fig. 5 shows two signals for discontinuities (reflections R, R') at different z-positions. By analyzing the THz signal the thickness of the layers 43, 44 can thus be investigated, and/or a deviation from a standard thickness can be recognized. Furthermore, if the sample is supposed to be homogenous, an additional reflection R, R' may be an indicator for small cracks or other material errors. In general, deviations from a reference signal derived from a standard product may serve as a fast indicator for production errors.

Fig. 6+7 show examples for polarization affecting means 30 in a setup as described above. The setup is especially suited for DAST or a similar optically non-linear material in which the conversion/detection efficiency is maximum for optical pump/probe pulses having the same polarization and the same propagation direction with respect to the crystal axes, e.g. the <100>. The beam splitter 22 is a polarizing beam splitter. Its orientation is chosen such that the linear polarized light 11 coming from the light source is transmitted. A Faraday rotator 31 and a halfwaveplate 32 are arranged between the beam splitter 22 and the non-linear member 20 such that the effects on the incoming pump beam 12 are compensated, and such that the polarization of the pump beam 12 corresponds to the original linear polarization. In the reverse direction, the effects of the Faraday rotator 31 and the halfwaveplate 32 result in a rotation of the linear polarization of 90°, such that the probe beam 14 is reflected by the beam splitter 22 towards the photosensitive part of the detector. In the non-linear optical crystal, pump and probe beam have the same linear polarization. This is beneficial in connection with, for example, DAST in its <100> configuration as non-linear material.

In a variation of the setup shown in Fig. 6, the Faraday rotator 31 and a half- or quarterwaveplate 32 could be combined such that the probe beam propagating towards the beam splitter 22 has - without the THz induced modification - a nearly circular polarization. The intensity reflected at the polarizing beam splitter 22 directly depends on the THz field. The advantage of this embodiment, that is also suited for ZnTe as a non-linear material, is that it is a very simple. Other embodiments, e.g. as shown in Fig. 8, allow to further increase the efficiency with ZnTe or related materials as non-linear material (see discussion below).

Fig. 7 shows another example that is based on the setup shown in Fig. 6. Both the linear polarization of the incoming beam 11 and the polarizing beam splitter 22 are rotated by 45° such that the original beam is completely transmitted. The Faraday rotator 31 rotates the polarization of the pump beam 12 by 45°. The polarization of the probe beam 14, having passed the Faraday rotator 31 twice, is then rotated by 90° with respect to the original beam 11, and thus reflected by the beam splitter towards the photosensitive part of the detector.

The embodiments shown in Fig. 6 and 7 have in common that the non-linear crystal 20 can be irradiated with one and the same polarization for THz generation and THz detection, for example light linearly polarized in the <100> direction of a DAST crystal. These embodiments further ensure that the probe beam reaches the photosensitive part of the detector by reflection at the beam splitter 22 with a maximum intensity. Unlike in the prior art where crossed polarizers are used and very small absolute intensities have to be detected, the invention allows to detect polarization changes or other variations in the probe beam with a good signal-noise-ratio.

Fig. 8 shows a further setup that is especially suited for THz generation and detection with ZnTe as optically non-linear member 20. The basic setup is as described above with respect to Figs. 6+7.

For ZnTe the following is valid: For optimum generation/conversion and detection efficiency, the optical pump beam and the THz beam, and the optical probe beam and the THz beam, respectively, have the same polarization. The direction of the polarization with respect to the crystal, however, are not the same for optimum generation and detection, respectively. The generation is most efficient, if the polarization is under an angle of approximately 55° with respect to the <001> crystal axis. The optimum angle for detection is 90° with respect to the <001> crystal axis. It seems to be straightforward to chose an angle in between these two optimum values and accept some losses compared to the respective optimum.

Contrary thereto, the following optimum configuration was found: The (linear) polarization of the pump beam is chosen such that it has an angle of approximately 47° with respect to the <001> crystal axis. In this configuration, the product of generated THz amplitude and change in the index of refraction induced thereby is maximized. The THz polarization is then under 62°, and the angle of change of refraction 52°. As a second step, the polarization of the probe beam is chosen such that the change of the index of refraction has an effect on the probe beam. This is automatically fulfilled for a probe beam with circular polarization. For these reasons it is beneficial to arrange a further polarization changing element 33, e.g. a λ/8 plate, in between the dichroic mirror 26 and the reflector 29, which changes the linear polarization of the incoming beam into a circular polarization of the probe beam incident on the non-linear member 20. The THz field changes the circular polarization into an elliptical polarization.

In order to achieve a maximum change in the fraction of probe light reflected at the beam splitter 22 by said polarization change, the polarization is rotated about approximately 40°. As the original pump beam shall be unchanged, this is preferably achieved by a combination of Faraday-rotator and a waveplate, as described with respect to Fig. 7.

A plurality of other configurations is also possible, but with reduced efficiency. For example, a setup without elements 31, 32 could be used, if the original polarization is under approximately 20° with respect to the <001> crystal axis. The efficiency is then about 42% of the maximum efficiency in the optimized case described above.

## Claims

1. An apparatus for investigating a sample, the apparatus comprising:
- an emitter, which is configured to generate a Terahertz beam having at least one frequency in the range from 0.01 to 100 THz upon exposure with an electromagnetic pump beam having at least one frequency in the optical range;
- a detector, which is configured to measure a modification in an electromagnetic probe beam having at least one frequency in the optical range, wherein the modification is induced by the Terahertz beam;
- a Terahertz beam path for directing the Terahertz beam generated by the emitter onto the sample and for directing the Terahertz beam reflected from the sample or from a Terahertz reflector located behind the sample to the detector;
- an optically non-linear member which functions both as an active part of the emitter and as an active part of the detector;
further comprising:
- an optical reflector arranged behind the optically non-linear member, as seen in the direction of pump beam propagation, wherein the second reflector is arranged to reflect the pump beam back onto the optical non-linear member such that the reflected pump beam is able to act as probe beam.

2. An apparatus according to claim 1, further comprising an adjustable delay arranged behind the optically non-linear member in a path of the pump beam, as seen in the direction of pump beam propagation, wherein the delay preferably comprises an actuator for moving the optical reflector in the direction of pump beam propagation.

3. An apparatus according to claim 1 or 2, further comprising a beam splitting element arranged behind the optically non-linear member, as seen in the direction of pump beam propagation, wherein the beam splitting element serves to spatially separate the Terahertz beam and the pump beam from one another and to combine the reflected Terahertz beam and the probe beam.

4. An apparatus according to one of the preceding claims, wherein the Terahertz beam path is configured such that the Terahertz beam is incident on the sample under an angle of incidence of 80-100°, preferably 90°, and is configured to redirect the reflected Terahertz beam to the optically non-linear member.

5. An apparatus according to one of the preceding claims, further comprising a Faraday rotator arranged in front of the optical non-linear member, as seen in the direction of pump beam propagation, and behind the optical non-linear member, as seen in the direction of probe beam propagation.

6. An apparatus according to claim 5, further comprising a wave plate arranged in front of the optical non-linear member, as seen in the direction of pump beam propagation, and behind the optical non-linear member, as seen in the direction of probe beam propagation.

7. An apparatus according to one of the preceding claims, further comprising a pulsed light source, in particular a laser, configured to emit light suitable for Terahertz generation upon interaction with the optical non-linear member.

8. A method for investigating a sample, comprising the following steps:
- generating a Terahertz beam having at least one frequency in the range from 0.01 to 100 THz by exposing an emitter with an electromagnetic pump beam having at least one frequency in the optical range;
- directing the Terahertz beam onto the sample and directing the Terahertz beam reflected from the sample or from a first reflector located behind the sample to a detector;
- measuring, in the detector, a modification in an electromagnetic probe beam having at least one frequency in the optical range, wherein the modification is induced by the Terahertz beam;
- wherein an optical non-linear member functions both as an active part of the emitter and as an active part of the detector; further comprising:
- reflecting the pump beam transmitted by the optical non-linear member back onto the optical non-linear member such that the reflected pump beam acts as probe beam.

9. The method as claimed in claim 8, further comprising spatially separating the Terahertz beam and the pump beam from one another by means of a beam splitting element.

10. The method as claimed in claim 9, further comprising combining the Terahertz beam and the probe beam by means of the beam splitting element prior to irradiating the optical non-linear member.

11. The method as claimed in one of claims 8 to 10, wherein the pump beam, the probe beam, and the Terahertz beam are pulsed beams.

12. The method as claimed in claim 11, further comprising introducing a variable delay between the pulses of the probe beam and of the Terahertz beam.

13. The method as claimed in claim 12, further comprising obtaining a spectrum of the sample by analyzing a signal detected by the detector as a function of the delay.
